(19) Europäisches Patentamt / European Patent Office / Office européen des brevets

(11) **EP 2 183 574 B1**

(12) **FASCICULE DE BREVET EUROPEEN**

(45) Date de publication et mention de la délivrance du brevet:
**30.09.2015 Bulletin 2015/40**

(51) Int Cl.:
**G01N 21/64** *(2006.01)*  **G01J 3/44** *(2006.01)*
**G01N 21/84** *(2006.01)*

(21) Numéro de dépôt: **08827617.5**

(22) Date de dépôt: **07.08.2008**

(86) Numéro de dépôt international:
**PCT/FR2008/051479**

(87) Numéro de publication internationale:
**WO 2009/024720 (26.02.2009 Gazette 2009/09)**

(54) **PROCEDE ET DISPOSITIF DE DETERMINATION DU RAPPORT DES TENEURS EN CHLOROPHYLLE ET EN UN COMPOSE CHROMOPHORE D'UN TISSU VEGETAL SANS MESURER INDEPENDAMMENT CES TENEURS**

VERFAHREN UND VORRICHTUNG ZUR BESTIMMUNG DES VERHÄLTNISSES ZWISCHEN DEM GEHALT VON CHLOROPHYLL UND EINER CHROMOPHOREN VERBINDUNG IN PFLANZENGEWEBE OHNE UNABHÄNGIGE MESSUNG BESAGTER GEHALTE

METHOD AND DEVICE FOR DETERMINING THE RATIO BETWEEN THE CONTENTS OF CHLOROPHYLL AND OF A CHROMOPHORE COMPOUND IN A VEGETABLE TISSUE WITHOUT INDEPENDENTLY MEASURING SAID CONTENTS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.08.2007 FR 0757056**

(43) Date de publication de la demande:
**12.05.2010 Bulletin 2010/19**

(73) Titulaires:
- **Force-A**
  **91400 Orsay (FR)**
- **Centre National de la Recherche Scientifique**
  **75016 Paris (FR)**
- **Université Paris Sud**
  **91400 Orsay (FR)**

(72) Inventeurs:
- **CEROVIC, Zoran**
  **F-75015 Paris (FR)**
- **GOULAS, Yves**
  **F-92350 Le Plessis Robinson (FR)**
- **LATOUCHE, Gwendal**
  **F-75013 Paris (FR)**
- **MOISE, Nicolae**
  **décédé (FR)**

(74) Mandataire: **Pontet Allano & Associes**
**Parc Les Algorithmes, Bâtiment Platon**
**CS 70003 Saint-Aubin**
**91192 Gif-sur-Yvette Cedex (FR)**

(56) Documents cités:
- **OUNIS A, ET AL: "Dual-excitation FLIDAR for the estimation of epidermal UV absorption in leaves and canopies." REMOTE SENSING OF ENVIRONMENT, vol. 76, 2001, pages 33-48, XP002476982**
- **CARTELAT A ET AL: "Optically assessed contents of leaf polyphenolics and chlorophyll as indicators of nitrogen deficiency in wheat (Triticum aestivum L.)" FIELD CROPS RESEARCH, ELSEVIER, AMSTERDAM, NL, vol. 91, no. 1, 14 janvier 2005 (2005-01-14), pages 35-49, XP004699781 ISSN: 0378-4290 cité dans la demande**
- **MEYER S ET AL: "Relationships between optically assessed polyphenols and chlorophyll contents, and leaf mass per area ratio in woody plants: a signature of the carbon-nitrogen balance within leaves?" PLANT CELL AND ENVIRONMENT, vol. 29, no. 7, juillet 2006 (2006-07), pages 1338-1348, XP002459287 ISSN: 0140-7791**

- **BILGER W, ET AL: "UV-excited chlorophyll fluorescence as a tool for the assessment of UV-protection by the epidermis of plants" JOURNAL OF EXPERIMENTAL BIOLOGY, vol. 52, no. 363, 2001, pages 2007-2014, XP002476983**
- **GOULAS Y ET AL: "Dualex: a new instrument for field measurements of epidermal ultraviolet absorbance by chlorophyll fluorescence" APPLIED OPTICS, OSA, OPTICAL SOCIETY OF AMERICA, WASHINGTON, DC, US, vol. 43, no. 23, 10 août 2004 (2004-08-10), pages 4488-4496, XP002459288 ISSN: 0003-6935**
- **CEN H, ET AL: "Non-destructive estimation of rape nitrogen status uisng SPAD chlorophyll meter" IEEE CONFERENCE ON SIGNAL PROCESSING, vol. 1, 2006, pages 1-4, XP002476984**

**Description**

La présente invention concerne un procédé de détermination optique du rapport des teneurs en un composé chromophore et en chlorophylle d'un tissu végétal. Il concerne également un système mettant en oeuvre ce procédé.

L'invention concerne plus particulièrement la détermination optique, non destructive et in situ du rapport des teneurs en un composé chromophore et en chlorophylle d'un tissu végétal.

Actuellement, de plus en plus de travaux sont menés pour caractériser un tissu végétal par la teneur des différents composés que contient ce tissu végétal et par le rapport des teneurs de certains composés. Par exemple, plusieurs travaux ont montré l'intérêt, pour le suivi de la nutrition azotée, du rapport des teneurs en polyphénols et en chlorophylle des feuilles. Voir à ce sujet l'article de Cartelat et coll. paru en 2005 dans Field Crops Research (91: 35-49) intitulé « Optically assessed contents of leaf polyphenolics and chlorophyll as indicators of nitrogen deficiency in wheat (Triticum aestivum L.) ». En effet, ces travaux montrent que les polyphénols ou la chlorophylle, pris isolément, varient à la fois le long de la feuille et en fonction de la dose d'azote apportée. En revanche, le rapport (teneur en chlorophylle)/(teneur en polyphénols) est caractérisé par des zones de stabilité le long de la feuille. Ces travaux montrent que ce rapport permet un meilleur pouvoir discriminateur du besoin en azote d'une feuille végétale que la teneur en chlorophylle ou la teneur en polyphénols. Ce qui en fait un indicateur intéressant pour la gestion des cultures.

Actuellement la détermination optique du rapport (teneur en chlorophylle)/(teneur en polyphénols) est réalisée de la manière suivante : on détermine d'une part la teneur en chlorophylle, et d'autre part la teneur en polyphénols puis on calcule le rapport de ces teneurs.

Différents procédés pour la mesure d'une part de la teneur en polyphénols, et d'autre part de la chlorophylle sont connus. Pour la mesure des polyphénols, l'article de Bilger et coll. intitulé « Measurement of leaf epidermal transmittance of UV radiation by chlorophyll fluorescence » paru dans Physiologia Plantarum (vol 101, pp 754-763) décrit un procédé de mesure utilisant l'effet d'écran des polyphénols de l'épiderme sur l'induction de la fluorescence de la chlorophylle. Ce procédé consiste à mesurer la fluorescence de la chlorophylle d'une feuille excitée dans l'ultraviolet, rapportée à la fluorescence de la même feuille excitée dans le visible. Comme les polyphénols absorbent l'ultraviolet mais pas le visible, on déduit du rapport des deux fluorescences le contenu de l'épiderme de la feuille en polyphénols. Un procédé similaire est décrit dans l'article de Ounis et coll. intitulé "Dual-excitation FLIDAR for the estimation of epidermal UV absorption in leaves and canopies" paru dans Remote Sensing of Environment (vol 76, pp 33-48, 2001).

Le document FR 2 830 325 (Goulas, Cerovic et coll. 2001) décrit un instrument (Dualex) qui exploite cette méthode avec une boucle de rétroaction qui permet d'éliminer les effets perturbants de la fluorescence variable de la chlorophylle.

D'autre part, pour la mesure optique de la chlorophylle plusieurs procédés basés soit sur l'absorption, soit sur la fluorescence ont déjà été décrits. Pour un procédé basé sur la fluorescence, on pourra se référer à l'article de Lichtenthaler et Rinderle paru en 1988 dans la revue « CRC Crit Rev Anal Chem » (vol 19 pages 29-85) intitulé « The role of chlorophyll fluorescence in the detection of stress conditions in plants ».

Cependant, dans tous les cas, il en résulte un nombre important de sources, d'où une complexité accrue et une augmentation de l'encombrement et du coût d'un système mettant en oeuvre ces procédés de mesure.

Un but de l'invention est de proposer un procédé et un système de détermination du rapport des teneurs en chlorophylle et en un composant chromophore non fluorescent dans la bande de fluorescence de la chlorophylle plus simples que les procédés et systèmes actuels.

L'invention propose d'atteindre ce but et de remédier aux problèmes précités par un procédé pour déterminer le rapport des teneurs en chlorophylle et en un composé chromophore d'un tissu végétal, le composé chromophore étant non fluorescent dans la bande de fluorescence de la chlorophylle. Le procédé selon l'invention comprend les opérations suivantes :

- émission, par un premier émetteur en direction du tissu végétal, d'un rayonnement optique, dit premier rayonnement d'excitation, choisi de manière à être absorbé en partie par le composé chromophore et induire un premier rayonnement de fluorescence de la chlorophylle,
- détection, par un premier détecteur, d'une partie du premier rayonnement de fluorescence se trouvant sensiblement en dehors du spectre d'absorption de la chlorophylle,
- émission, par un deuxième émetteur en direction du tissu végétal, d'un rayonnement optique, dit deuxième rayonnement d'excitation, choisi de manière à ne pas être absorbé par le composé chromophore et induire un deuxième rayonnement de fluorescence de la chlorophylle,
- détection, par un deuxième détecteur, d'une partie du deuxième rayonnement de fluorescence se trouvant dans le spectre d'absorption de la chlorophylle, et
- détermination du rapport des teneurs à partir du rapport des rayonnements de fluorescence détectés.

Le procédé selon l'invention permet, donc, de déterminer de manière rapide, non destructive et réalisable in situ le rapport des teneurs en chlorophylle et en un composé chromophore non fluorescent d'un tissu végétal. Par ailleurs le procédé selon l'invention permet de déterminer le rapport des teneurs sans avoir à déterminer chacune des teneurs en chlorophylle et en composé chromophore du tissu végétal.

Par ailleurs, grâce au procédé selon l'invention la détermination du rapport des teneurs en un composé chromophore fluorescent et en un composé chromophore non fluorescent d'un tissu végétal est réalisée avec moins d'émetteurs ou sources. Ce qui rend la mise en oeuvre du procédé selon l'invention plus simple que la mise en oeuvre des procédés actuels.

Avantageusement, chaque détecteur fournit un signal électrique. Le procédé selon l'invention peut comprendre un échantillonnage, par des moyens d'échantillonnage, du signal électrique fourni par chacun des premier et deuxième détecteurs.

Dans une première version particulière du procédé selon l'invention, les premier et deuxième rayonnements d'excitation peuvent être émis sous forme d'impulsions de manière non simultanée.

Dans cette première version, le procédé selon l'invention peut comprendre une synchronisation des émetteurs et des moyens d'échantillonnage de manière à ce que l'échantillonnage du signal électrique fourni par le premier et/ou le deuxième détecteur soit réalisé lorsque le premier et/ou le deuxième émetteur émet une impulsion.

Dans une deuxième version particulière du procédé selon l'invention, les premier et deuxième rayonnements de fluorescence peuvent être émis sous forme de signaux modulés à deux fréquences différentes. Ces signaux peuvent être sinusoïdaux, des signaux carrés, ou tout autre forme.

Dans cette deuxième version, le procédé selon l'invention peut en outre comprendre un filtrage, à la fréquence de modulation du premier rayonnement d'excitation, du signal électrique généré par le premier détecteur détectant le premier rayonnement de fluorescence et un filtrage, à la fréquence de modulation du deuxième rayonnement d'excitation, du signal électrique généré par le deuxième détecteur détectant le deuxième rayonnement de fluorescence. Ainsi, les signaux électriques générés par le premier détecteur d'une part, et par le deuxième détecteur d'autre part, peuvent être séparés par un filtrage adapté aux fréquences de modulations respectivement des premier et deuxième rayonnements d'excitation.

Le procédé selon l'invention peut avantageusement être mis en oeuvre directement sur une entité végétale choisie dans la liste suivante :

- une feuille végétale,
- un tissu d'une plante,
- une partie d'une plante, et
- un ensemble de plantes.

En effet, le procédé selon l'invention peut être mis en oeuvre directement sur un tissu d'une entité végétale telle qu'une plante sans avoir à prélever ce tissu. Par ailleurs, le procédé selon l'invention peut être mis en oeuvre à distance fixe ou variable du tissu végétal.

Dans le cadre d'un exemple non limitatif :

- le composé chromophore est un composé de la famille des polyphénols, ou un groupe de composés de cette famille et la longueur d'onde du premier rayonnement d'excitation est comprise entre 300 et 500 nm. La longueur d'onde de ce premier rayonnement d'excitation peut être plus particulièrement de 375 nm, et
- la longueur d'onde du deuxième rayonnement d'excitation est comprise entre 500 et 700 nm. La longueur d'onde de ce deuxième rayonnement d'excitation peut être plus particulièrement de 530 nm.

Le procédé selon l'invention peut être mis en oeuvre pour une détermination du besoin en nutrition azotée du tissu à partir du rapport des teneurs déterminé. Plus généralement, le procédé selon l'invention peut être mis en ouvre pour le suivi en nutrition azotée des plantes.

Suivant un autre aspect de l'invention, il est proposé un système pour déterminer le rapport des teneurs en chlorophylle et en un composé chromophore d'un tissu végétal, le composé chromophore n'étant pas fluorescent dans la bande de fluorescence de la chlorophylle. Le système selon l'invention comprend :

- un premier émetteur émettant, en direction du tissu, un rayonnement optique, dit premier rayonnement d'excitation, choisi de manière à être absorbé en partie par le composé chromophore et induire un premier rayonnement de fluorescence de la chlorophylle,
- un premier détecteur réalisant la détection d'une partie du premier rayonnement de fluorescence se trouvant sensiblement en dehors du spectre d'absorption de la chlorophylle,
- un deuxième émetteur émettant, en direction du tissu, un rayonnement optique, dit deuxième rayonnement d'excitation, choisi de manière à ne pas être absorbé par le composé chromophore et induire un deuxième rayonnement de fluorescence de la chlorophylle,

- un deuxième détecteur réalisant la détection d'une partie du deuxième rayonnement de fluorescence se trouvant dans le spectre d'absorption de la chlorophylle, et
- des moyens de calculs pour déterminer le rapport des teneurs à partir du rapport des rayonnements de fluorescences détectés.

Le système selon l'invention permet de déterminer le rapport des teneurs en chlorophylle et en un composé chromophore non fluorescent dans la bande de fluorescence de la chlorophylle, en mettant en oeuvre seulement deux émetteurs (ou sources) et donc avec moins de sources que les systèmes actuels. Le système selon l'invention est moins complexe à réaliser et, par ailleurs moins encombrant et plus simple à utiliser.

Cette simplicité vient du fait que le système selon l'invention n'a pas pour but de déterminer chacune des teneurs en chlorophylle et en composé chromophore du tissu végétal, mais seulement le rapport de ces teneurs.

Dans le système selon l'invention, les émetteurs et les détecteurs peuvent être disposés du même côté du tissu végétal.

Avantageusement, le système selon l'invention peut comprendre une optique de collimation réalisant la collimation du premier et du deuxième émetteur vers le tissu végétal et la collimation du premier rayonnement de fluorescence vers le premier détecteur et la collimation du deuxième rayonnement de fluorescence vers le deuxième détecteur.

Dans un mode de réalisation, l'optique de collimation peut comprendre pour au moins, un réflecteur parabolique ou quasi-parabolique positionné devant cet émetteur et réalisant la collimation de cet émetteur de manière à ce que le rayonnement émis par cet émetteur soit focalisé sur le tissu végétal.

Selon un autre mode de réalisation, l'optique de collimation peut comprendre :

- un premier miroir dichroïque recevant le premier et le deuxième rayonnement d'excitation, émis respectivement par le premier et le deuxième émetteur, selon deux directions sensiblement perpendiculaires et rendant les premier et deuxième rayonnements d'excitation colinéaires,
- un deuxième miroir dichroïque recevant le premier et le deuxième rayonnement de fluorescence provenant du tissu végétal de manière colinéaire et dirigeant le premier et le deuxième rayonnement de fluorescence respectivement sur le premier et le deuxième détecteur selon deux directions sensiblement perpendiculaires, et
- des lentilles optiques réalisant la collimation des rayonnements d'excitation et la collimation des rayonnements de fluorescence provenant du tissu.

Dans ce mode de réalisation, les rayonnements d'excitation et les rayonnements de fluorescences ne sont pas colinéaires. L'optique de collimation comprend une première série de lentilles optiques disposées devant les émetteurs et réalisant la collimation des rayonnements d'excitation et une deuxième série de lentilles optiques disposées devant les détecteurs et réalisant la collimation des rayonnements de fluorescences.

Selon encore un autre mode de réalisation, l'optique de collimation peut comprendre un troisième miroir dichroïque réalisant :

- la réflexion, vers le tissu végétal, des rayonnements d'excitation colinéaires provenant du premier miroir dichroïque, et
- la transmission, vers le deuxième miroir dichroïque, des rayonnements de fluorescence colinéaires provenant du tissu végétal.

Dans ce mode de réalisation, les rayonnements d'excitation et les rayonnements de fluorescence sont colinéaires entre le troisième miroir dichroïque et le tissu végétal, et la collimation des rayonnements d'excitation et des rayonnements de fluorescence est réalisée par les mêmes lentilles optiques. L'optique de collimation comprend une seule série de lentilles optiques réalisant à la fois la collimation des rayonnements d'excitation et des rayonnements de fluorescence. Les rayonnements de fluorescence et les rayonnements d'excitation sont colinéaires entre le troisième miroir dichroïque et le tissu. C'est le troisième miroir dichroïque qui a pour rôle de diriger :

- les rayonnements d'excitation provenant du premier miroir dichroïque vers la série de lentilles, et
- les rayonnements de fluorescence provenant du tissu vers les détecteurs correspondants.

De plus, chaque émetteur peut comprendre un filtre positionné devant cet émetteur. Ce filtre a pour rôle de purifier le rayonnement d'excitation émis par cet émetteur et d'éliminer les longueurs d'onde non désirées.

Par ailleurs, chaque détecteur peut aussi comprendre un filtre positionné devant ce détecteur, ce filtre ayant pour rôle de purifier le rayonnement de fluorescence arrivant vers ce détecteur d'éliminer les longueurs d'onde non désirées des rayonnements de fluorescences ainsi que les composantes résiduelles des rayonnements d'excitation.

Avantageusement, chacun des premier et deuxième détecteurs fournit un signal électrique, le système comprenant au moins un amplificateur amplifiant ce signal électrique.

En outre, lorsque les rayonnements d'excitation sont émis sous forme d'impulsions décalées dans le temps, le système selon l'invention peut comprendre au moins un échantillonneur commandé par au moins un signal de synchronisation de manière à réaliser l'échantillonnage du signal électrique fournit par le premier et/ou le deuxième détecteur lorsque le premier et/ou le deuxième rayonnement d'excitation est émis. Le signal de synchronisation peut correspondre à un signal de commande des sources d'émission des rayonnements d'excitation. Ainsi, lorsqu'un émetteur émet un rayonnement d'excitation, les moyens d'échantillonnage associés à cet émetteur échantillonnent le signal électrique fourni par le détecteur associé à cet émetteur.

Chacun des premier et deuxième émetteurs peut comprendre une matrice de diodes électroluminescentes ou des lasers émettant le rayonnement d'excitation.

Avantageusement, le système selon l'invention peut être positionné soit en contact soit à distance du tissu végétal à caractériser. Par ailleurs, la distance entre le système selon l'invention et le tissu végétal peut être soit fixe soit variable.

Par ailleurs, le système selon l'invention peut être embarqué sur une machine mobile pour caractériser à la volée une pluralité de plantes végétales, et plus particulièrement le besoin en azote et/ou la nutrition azotée des plantes.

Selon un mode de réalisation avantageux, le système selon l'invention peut comprendre ou peut être relié à des moyens de géo localisation permettant de réaliser une cartographie des plantes caractérisée selon un ou plusieurs critères prédéterminés. Ces critères peuvent comprendre le besoin en azote des plantes, la nutrition azotée des plantes, etc.

D'autres avantages et caractéristiques apparaîtront à l'examen de la description détaillée d'un mode de réalisation nullement limitatif, et des dessins annexés sur lesquels :

- la figure 1 est une représentation schématique du principe de la mesure du rapport des teneurs en chlorophylle et en un composé chromophore d'un tissu végétal ;
- la figure 2 est une représentation des spectres d'absorption et d'émission de fluorescence de la chlorophylle ;
- la figure 3 est une représentation schématique d'une première version d'un premier mode de réalisation du système selon l'invention ;
- la figure 4 est une représentation schématique d'une deuxième version du premier mode de réalisation du système selon l'invention ;
- la figure 5 est une représentation schématique d'une troisième version du premier mode de réalisation du système selon l'invention ;
- la figure 6 est une représentation schématique d'un deuxième mode de réalisation du système selon l'invention ;
- la figure 7 est une représentation schématique d'un troisième mode de réalisation du système selon l'invention ;
- la figure 8 est une représentation schématique d'un quatrième mode de réalisation du système selon l'invention ;
- la figure 9 est une représentation schématique d'un cinquième mode de réalisation du système selon l'invention ;
- la figure 10 est une représentation schématique d'une structure mobile supportant un système selon l'invention pour la mesure à la volée d'une surface importante de végétation ; et
- les figures 11 et 12 sont une illustration d'un exemple d'application de l'invention pour la détermination du rapport des teneurs en chlorophylle et en polyphénols d'une plante dans le but d'un suivi de l'état de nutrition azotée d'une culture.

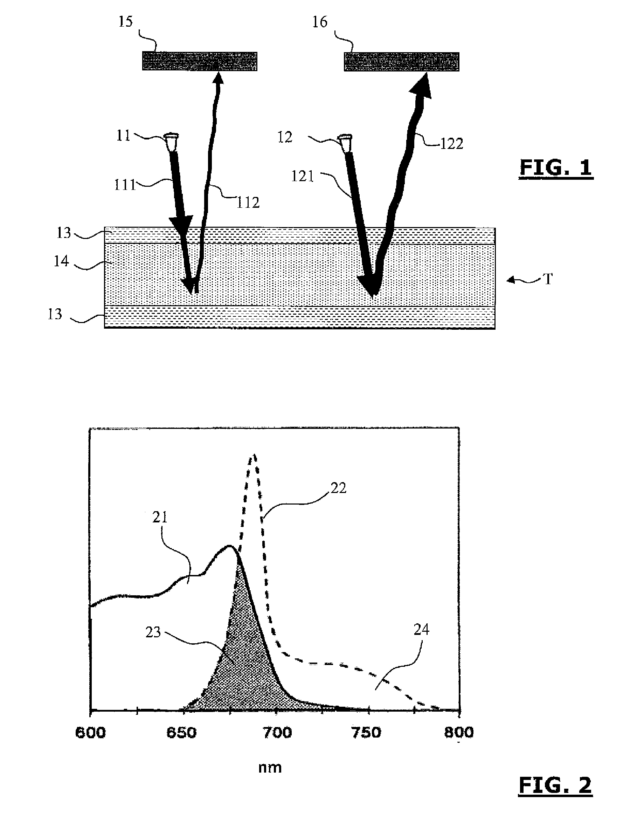

La figure 1 est une représentation schématique du principe de mesure du rapport des teneurs en chlorophylle et en un composé chromophore d'un tissu végétal. Une première source (ou émetteur) 11 émet un premier rayonnement d'excitation 111 et une deuxième source (ou émetteur) 12 émet un deuxième rayonnement 121. Ces émetteurs 11 et 12 sont disposées de manière que le tissu végétal T reçoive les rayonnements 111 et 121. Le composé chromophore 13 n'est pas fluorescent dans la bande de fluorescence de la chlorophylle 14.

Le premier rayonnement d'excitation 111 est choisi de manière à être partiellement absorbé par le composé chromophore 13. Le premier rayonnement d'excitation 111 pénètre dans le tissu T. Une partie de ce rayonnement 111 est absorbé par le composé chromophore 13. La partie non absorbée du rayonnement 111 est absorbée par la chlorophylle 14 et induit un premier rayonnement de fluorescence 112 de la chlorophylle 14.

Le deuxième rayonnement d'excitation 121 est choisi de manière à ne pas être (ou très faiblement) absorbé par le composé chromophore 13. Le deuxième rayonnement d'excitation 121 pénètre dans le tissu, traverse presque totalement la partie du tissu occupé par le composé chromophore 13 pour atteindre la chlorophylle 14. Le deuxième rayonnement 121 est alors absorbé par la chlorophylle 14 et induit un deuxième rayonnement de fluorescence 122 de la chlorophylle.

Les rayonnements de fluorescence 112 et 122 sont spectralement identiques. Ces rayonnements de fluorescence 112 et 122 présentent un spectre dont une partie se trouve en dehors du spectre d'absorption de la chlorophylle 14 et une autre dans le spectre d'absorption de la chlorophylle. La partie des rayonnements de fluorescence 112 et 122 se trouvant dans le spectre d'absorption de la fluorescence 14 est réabsorbée partiellement par la chlorophylle 14.

Un détecteur 15 est prévu pour détecter seulement une partie du premier rayonnement de fluorescence 112 se trouvant en dehors du spectre d'absorption de la chlorophylle et un détecteur 16 est prévu pour détecter seulement une partie du deuxième rayonnement de fluorescence 122 se trouvant dans le spectre d'absorption de la chlorophylle.

La figure 2 donne une représentation du spectre d'absorption 21 de la chlorophylle 14 et du spectre de fluorescence 22 de la chlorophylle 14, donc du spectre des rayonnements de fluorescence 112 et 122. Tel qu'on le constate sur la figure 2, les spectres d'absorption 21 et de fluorescence de la chlorophylle 14 se recouvre. Pour chaque rayonnement de fluorescence 112 et 122 de la chlorophylle 14, les longueurs d'onde se trouvant dans la bande spectrale 23 sont en partie réabsorbées par la chlorophylle et les longueurs d'onde se trouvant dans la bande spectrale 24 ne sont pas réabsorbées par la chlorophylle. Le détecteur 15 est donc prévu pour détecter une partie du rayonnement de fluorescence 112 se trouvant dans la bande spectrale 24 et le détecteur 16 est prévu pour détecter une partie du rayonnement de fluorescence 122 se trouvant dans la bande spectrale 23.

Par ailleurs, les rayonnements de fluorescence 112 et 122 sont bien entendu isotropes. D'un point de vu spatial, les détecteurs 15 et 16 ne reçoivent qu'une seule partie de ces rayonnements 112 et 122. Pour une facilité de description et de représentation, nous ne tiendrons pas compte de l'aspect isotrope des rayonnements de fluorescence 112 et 122. Dans la suite de la description, nous nous intéresserons seulement à la partie de chaque rayonnement de fluorescence détecté par le détecteur 15 ou 16.

De plus, dans la suite de la description, les bandes spectrales 23 et 24 seront respectivement appelées la bande RF pour « red fluorescence » (fluorescence rouge) et FRF pour « far red fluorescence » (fluorescence dans le rouge lointain). Ainsi, la partie du premier rayonnement de fluorescence 112 détectée par le détecteur 15 sera appelé fluorescence FRF et la partie du deuxième rayonnement de fluorescence 122 détectée par le détecteur 16 sera appelé fluorescence RF.

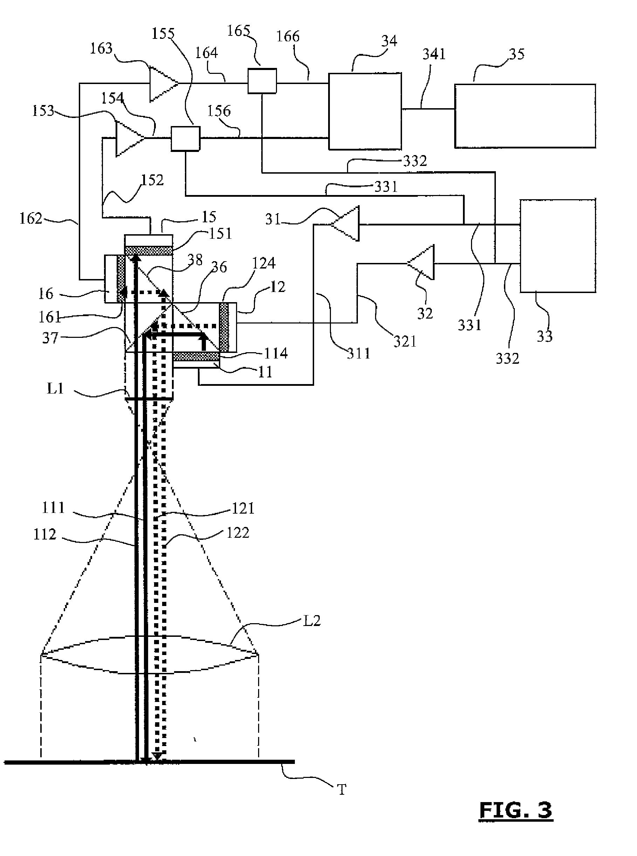

Les figures 3 à 9 sont des représentations schématiques de plusieurs modes de réalisation d'un système selon l'invention. Quelque soit le mode de réalisation, le système selon l'invention comprend la première source (ou émetteur) 11 émettant le premier rayonnement d'excitation 111, la deuxième source (ou émetteur) 12 émettant le deuxième rayonnement d'excitation 121.

Le système comprend en outre le premier détecteur 15 prévu pour détecter la fluorescence FRF induite par la premier rayonnement 111 et le deuxième détecteur 16 prévu pour détecter la fluorescence RF induite par le deuxième rayonnement d'excitation 121.

Dans l'exemple présent, les rayonnements d'excitation 111 et 121 sont émis sous forme d'impulsions. Les sources 11 et 12 sont alimentées par des alimentations 31 et 32 commandées par un module de commande et de synchronisation 33 fournissant à l'entrée de chacune des alimentations 31 et 32 un signal de commande et de synchronisation, respectivement 331 et 332. Chacune des alimentations 31 et 32 fournit un courant, respectivement 311 et 321, dans les sources 11 et 12 en fonction de l'état de leur entrée. Quand l'entrée d'une alimentation est à l'état logique haut, une impulsion de courant est envoyée dans la source. Quand l'entrée d'une alimentation est à l'état logique bas, la source est éteinte et aucune impulsion de courant n'est envoyée. Les signaux 331 et 332, fournis par le module de commande et de synchronisation 33 et présents à l'entrée de commande des alimentations 31 et 32 sont des impulsions de sorte que les sources 11 et 12 sont actionnées de manière alternée et non simultanée.

Devant chaque détecteur 15 et 16 est placé un filtre 151 et 161 qui ne laisse passer que la partie désirée des rayonnements de fluorescence 112 et 122. En effet, le filtre 151, positionné devant le détecteur 15, ne laisse passer que la partie FRF du premier rayonnement de fluorescence 112 et le filtre 161, positionné devant le détecteur 16, ne laisse passer que la partie RF du deuxième rayonnement de fluorescence 122. Bien entendu, ces filtres 151 et 161 peuvent être choisis pour laisser passer seulement une partie de la fluorescence FRF ou RF vers les détecteurs 15 et 16 et/ou rejeter les longueurs d'onde d'excitation.

Les détecteurs 15 et 16, prévus pour détecter la fluorescence désirée, fournissent chacun une grandeur électrique, respectivement 152 et 162. Ces grandeurs électriques 152, 162 sont représentatives des émissions de fluorescence du tissu T analysé, c'est-à-dire des rayonnements de fluorescence 112 mesuré dans la bande 24 et 122 mesuré dans la bande 23. Le tissu T peut être une feuille, une plante ou une partie d'une plante, ou un ensemble de plantes. Les signaux électriques 152 et 162 sont amplifiés par des amplificateurs, respectivement 153 et 163, qui fournissent deux signaux amplifiés, respectivement 154 et 164. Les signaux amplifiés 154 et 164 sont échantillonnés par des échantillonneurs-bloqueurs 155 et 165. Les échantillonneurs 155 et 165 sont commandés par deux signaux de synchronisation, qui sont dans l'exemple présent les signaux 331 et 332 présents aussi à l'entrée des alimentations 31 et 32. L'échantillonneur-bloqueur 155 échantillonne et met en mémoire analogique le signal 154 issu du détecteur 15 uniquement pendant la mise en route de la source 11 et l'échantillonneur-bloqueur 165 échantillonne et met en mémoire analogique le signal 164 issu de du détecteur 16 uniquement pendant la mise en route de la source 12. Ainsi les échantillonneurs-bloqueurs 155 et 165 fournissent des grandeurs continues 156 et 166 représentatives des fluorescences induites respectivement par les rayonnements d'excitation 111 et 121, dans les bandes d'émission 24 (FRF) et 23 (RF).

Ces grandeurs 156 et 166 sont alors converties, au moyen d'un convertisseur analogique-numérique 34, en données numériques 341 transmises à un module de calculs et de communication 35 comprenant un microcontrôleur, une mémoire numérique, un afficheur, un moyen de communication numérique comme une interface série et un clavier. Le module de calculs et de communication 35 calcule le rapport entre la grandeur 156 et la grandeur 166, représentatif du rapport des teneurs en chlorophylle et en composé chromophore du tissu T.

En effet, l'invention permet de déterminer directement le rapport des teneurs sans déterminer séparément la teneur en chlorophylle et la teneur en composé chromophore du tissu T.

Quelque soit le mode de réalisation, les sources 11 et 12 et les détecteurs 15 et 16 sont adéquatement orientés et collimatés.

Dans le premier mode de réalisation, représenté schématiquement en figure 3, les rayonnements d'excitation 111 et 121 sont émis par les sources 11 et 12, associés à deux filtres respectivement 114 et 124, selon deux directions sensiblement perpendiculaires. Les filtres 114 et 124 permettent d'éliminer les composantes non désirées des rayonnements 111 et 121. Ces rayonnements 111 et 121 arrivent sur un miroir dichroïque 36 positionné à sensiblement 45° par rapport aux directions d'émission des rayonnements d'excitation 111 et 121. Le miroir dichroïque 36 rend les rayonnements 111 et 121 colinéaires, en laissant passer l'un des ces rayonnements, ici le deuxième rayonnement d'excitation 121, et en réfléchissant l'autre de ces rayonnements, ici le premier rayonnement d'excitation 111. Les rayonnements d'excitation 111 et 121 colinéaires arrivent ensuite sur un deuxième miroir dichroïque 37 qui réfléchit les rayonnements d'excitation vers le tissu T. Les rayonnements d'excitation 111 et 121 réfléchis par le miroir dichroïque vers le tissu T sont ensuite collimatés sur le tissu T par deux lentilles L1 et L2. Les rayonnements d'excitation 111 et 121 sont toujours colinéaires. Les rayonnements de fluorescence 112 et 122 induits par les rayonnements d'excitation 111 et 121 sont collimatés par les lentilles L2 et L1 sur le miroir dichroïque 37. Ce dernier laisse passer ces rayonnements 112 et 122 vers un troisième miroir dichroïque 38 disposés sensiblement à 45° par rapport aux détecteurs 15 et 16. Ce miroir dichroïque laisse passer la partie FRF du rayonnement 112 vers le détecteur 15 et réfléchit la partie RF du rayonnement de fluorescence 122 vers le détecteur 16.

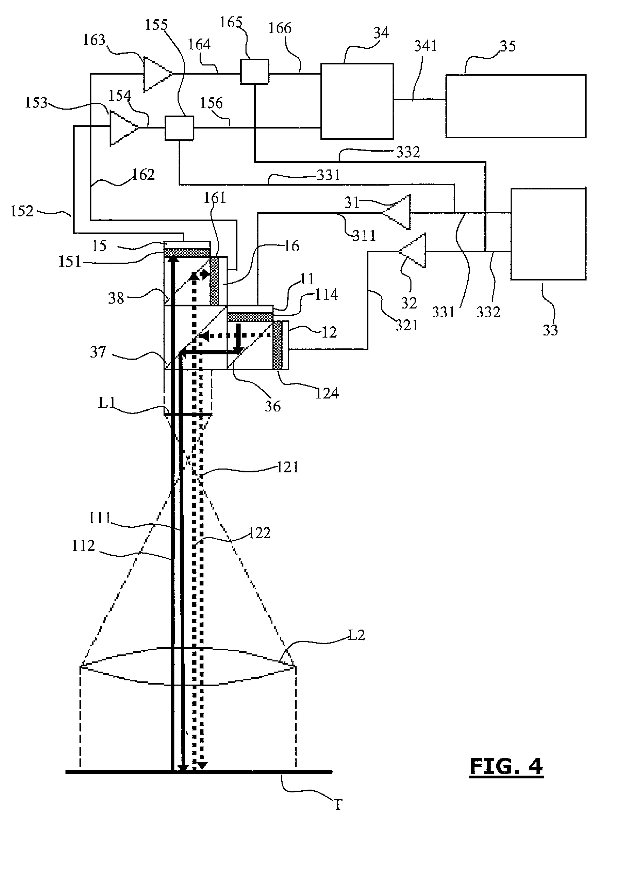

La figure 4 présente une deuxième version du premier mode de réalisation représenté en figure 3. Dans cette deuxième version les détecteurs 15 et 16 et les émetteurs 11 et 12 sont positionnés selon une disposition différente de la première version.

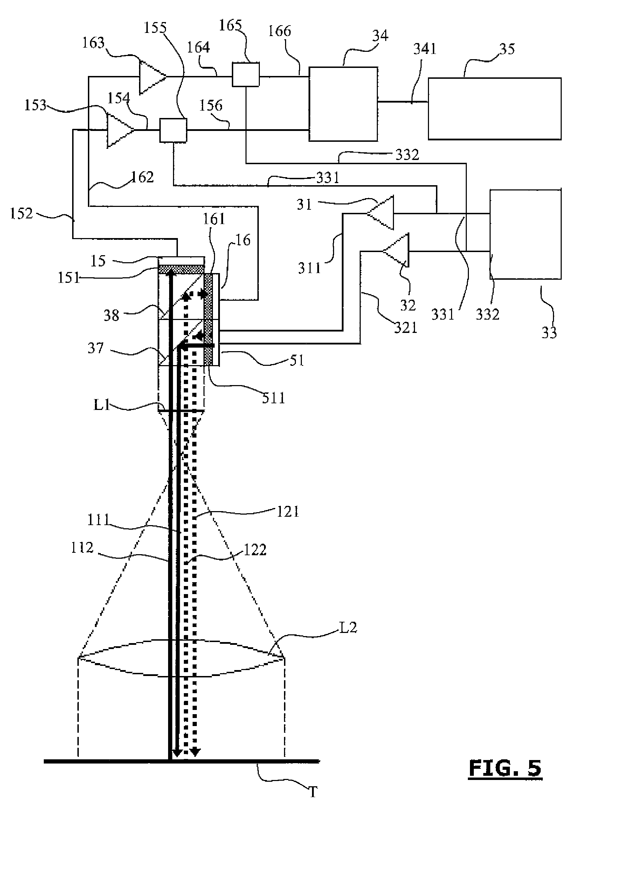

La figure 5 est une troisième version du premier mode de réalisation représenté en figures 3 et 4. Dans cette version les rayonnements d'excitation 111 et 121 sont émis de manière colinéaires et avantageusement par une même source 51, pouvant émettre à la fois le premier rayonnement d'excitation 111 et le deuxième rayonnement d'excitation 121, telle qu'une matrice de diodes pouvant émettre plusieurs rayonnements de longueurs d'onde différentes. Une telle source peut par exemple être une matrice de diodes trois couleurs RGB (Red-Green-Blue. Les rayonnements d'excitation 111 et 121 étant émis de manière colinéaire par la source 51, le miroir dichroïque 36 n'a pas d'utilité dans cette troisième version du premier mode de réalisation. Un ou plusieurs filtres 511 peuvent être positionnés devant la source 51 pour éliminer les composantes non désirées des rayonnements d'excitations 111 et 121 émis par la source 51.

Dans le premier mode de réalisation, dont trois versions sont représentées en figures 3, 4 et 5 les rayonnements d'excitation 111 et 121 sont colinéaires aux rayonnements de fluorescences 112 et 122 entre le miroir dichroïque 37 et le tissu T. Par ailleurs, la collimation des rayonnements d'excitation 111 et 121 sur le tissu T et la collimation des rayonnements de fluorescence sur le miroir dichroïque 37 est réalisée par les mêmes lentilles L1 et L2.

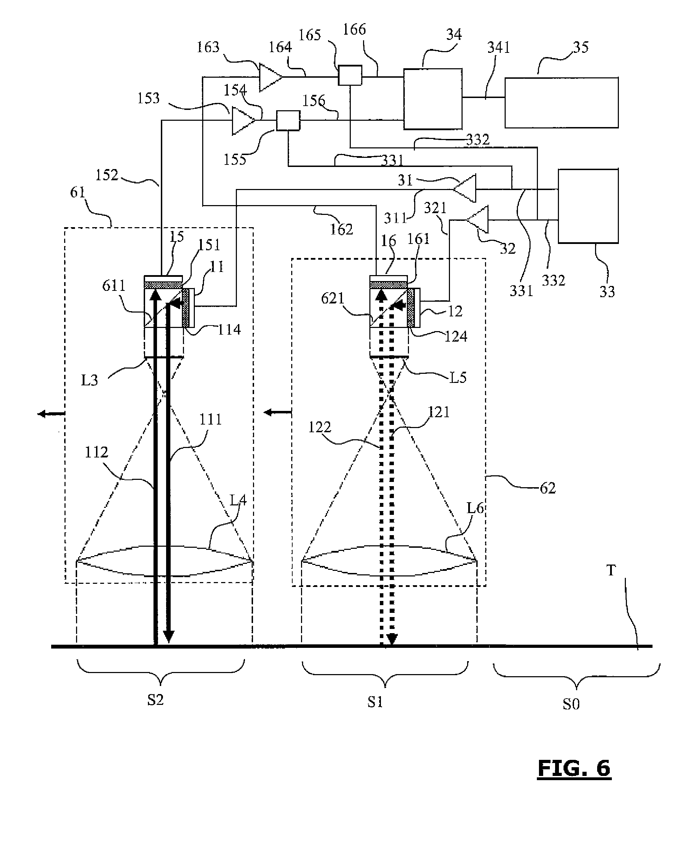

La figure 6 est une représentation schématique d'un deuxième mode de réalisation du système selon l'invention. Dans ce mode de réalisation l'émetteur 11 et le détecteur 15 forment un premier ensemble 61 comprenant en outre les filtres 114 et 151 ainsi que deux lentilles L3 et L4 réalisant la collimation du premier rayonnement d'excitation 111 sur le tissu T et la collimation du premier rayonnement de fluorescence 112 vers un miroir dichroïque 611. Le rayonnement d'excitation 111, émis par l'émetteur 11, est réfléchi par le miroir dichroïque 611 vers le tissu T. Les lentilles L3 et L4 réalisent alors la collimation du premier rayonnement d'excitation 111 sur le tissu T. Le premier rayonnement de fluorescence 112, induit par le premier rayonnement d'excitation 111, est collimaté par les lentilles L3 et L4 vers le miroir dichroïque 611. Ce miroir dichroïque laisse passer le premier rayonnement de fluorescence 112 vers le détecteur 15 devant lequel est positionné le filtre 151. L'émetteur 12 et le détecteur 16 forment un deuxième ensemble 62 comprenant en outre les filtres 124 et 161 ainsi que deux lentilles L5 et L6 réalisant la collimation du deuxième rayonnement d'excitation 121 sur le tissu T et la collimation du deuxième rayonnement de fluorescence 122 vers un miroir dichroïque 621. Le rayonnement d'excitation 121, émis par l'émetteur 12, est réfléchi par le miroir dichroïque 621 vers le tissu T. Les lentilles L5 et L6 réalisent alors la collimation du deuxième rayonnement d'excitation 121 sur le tissu T. Le deuxième rayonnement de fluorescence 122, induit par le deuxième rayonnement d'excitation 121, est collimaté par les lentilles L5 et L6 vers le miroir dichroïque 621. Ce miroir dichroïque 621 laisse passer le deuxième rayonnement de fluorescence 122 vers le détecteur 16 devant lequel est positionné le filtre 161.

Les ensembles 61 et 62 sont mobiles et se suivent. En effet, au temps t l'ensemble 61 est positionné vers une surface S1 du tissu T et l'ensemble 62 est positionné vers une surface S0 du tissu T. Une première mesure est réalisée. Puis, au temps t+1 l'ensemble 61 se déplace et se positionne vers une surface S2 du tissu T et l'ensemble 62 est positionné vers la surface S1. Une deuxième mesure est réalisée. Pour déterminer le rapport des teneurs en chlorophylle et en un composé chromophore de la surface S1 on utilise la mesure réalisée par l'ensemble 61 au temps t et la mesure réalisée par l'ensemble 62 au temps t+1.

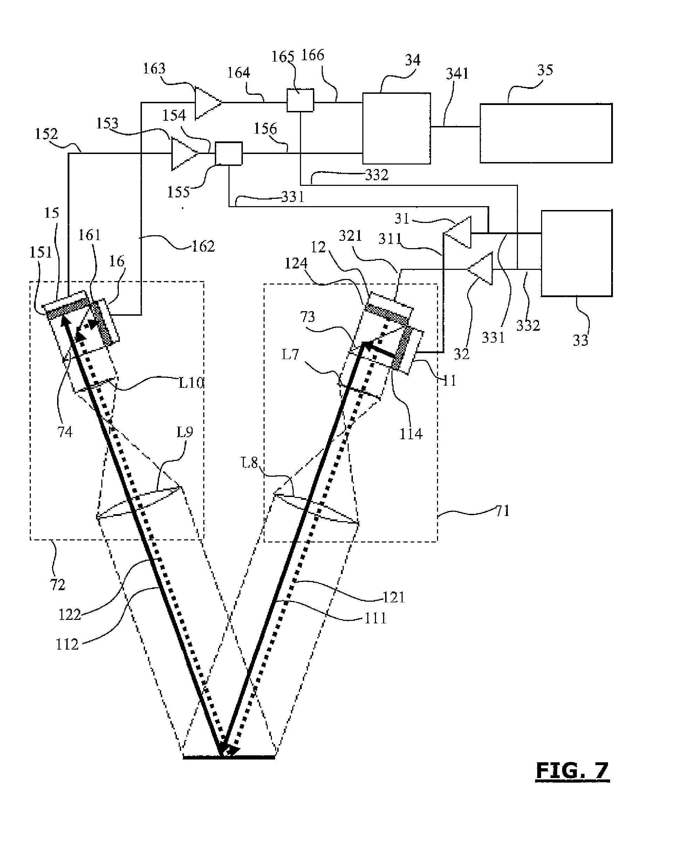

La figure 7 est une représentation schématique d'un troisième mode de réalisation dans lequel les émetteurs 11 et 12 forment un premier ensemble 71 comprenant en outre les filtres 114 et 124, un miroir dichroïque 73 ainsi que des lentilles de collimation L7 et L8. Les détecteurs 15 et 16 forment un deuxième ensemble 72 comprenant en outre les filtres 151 et 161, un miroir dichroïque 74 ainsi que deux lentilles de collimation L9 et L10. Dans ce troisième mode de réalisation les sources 11 et 12 sont disposées sensiblement perpendiculairement. Les rayonnements d'excitation 111 et 121 sont émis par les sources 11 et 12 selon deux directions sensiblement perpendiculaires. Ces rayonnements 111 et 121 arrivent sur un miroir dichroïque 73 positionné sensiblement à 45° par rapport aux directions d'émission des rayonnements d'excitation 111 et 121. Le miroir dichroïque 73 rend les rayonnements 111 et 121 colinéaires, en laissant passer l'un des ces rayonnements, ici le rayonnement 121 et en réfléchissant l'autre de ces rayonnements, ici le rayonnement 111. Ces rayonnements colinéaires sont ensuite collimatés sur le tissu T par les lentilles L7 et L8.

Les rayonnements de fluorescences 112 et 122, induits par les rayonnements 111 et 121, sont collimatés vers un miroir dichroïque 74 par une deuxième série de deux lentilles L9 et L10. Le miroir dichroïque 74 réfléchit la partie RF du deuxième rayonnement de fluorescence 122, et transmet la partie FRF du premier rayonnement de fluorescence 112.

Les miroirs dichroïques utilisés, dans les modes de réalisation décrits ci-dessus sont des miroirs dichroïques passe-haut (en longueur d'onde) adéquatement choisi selon les longueurs d'onde des différents rayonnements d'excitation et de fluorescence.

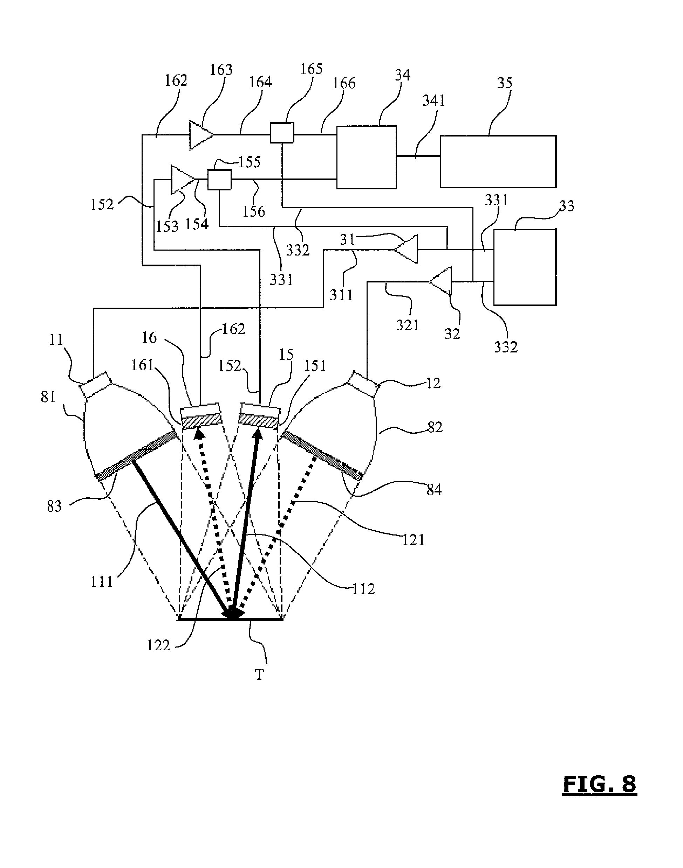

La figure 8 est une représentation schématique d'un quatrième mode de réalisation sans miroirs dichroïques du système selon l'invention. Dans ce quatrième mode de réalisation, la collimation des émetteurs 11 et 12 est réalisée par des réflecteurs paraboliques ou quasi-paraboliques 81 et 82 disposés devant les émetteurs 11 et 12. Des filtres 83 et 84 sont disposés devant les réflecteurs pour éliminer les composantes non désirées des rayonnements d'excitation 111 et 121.

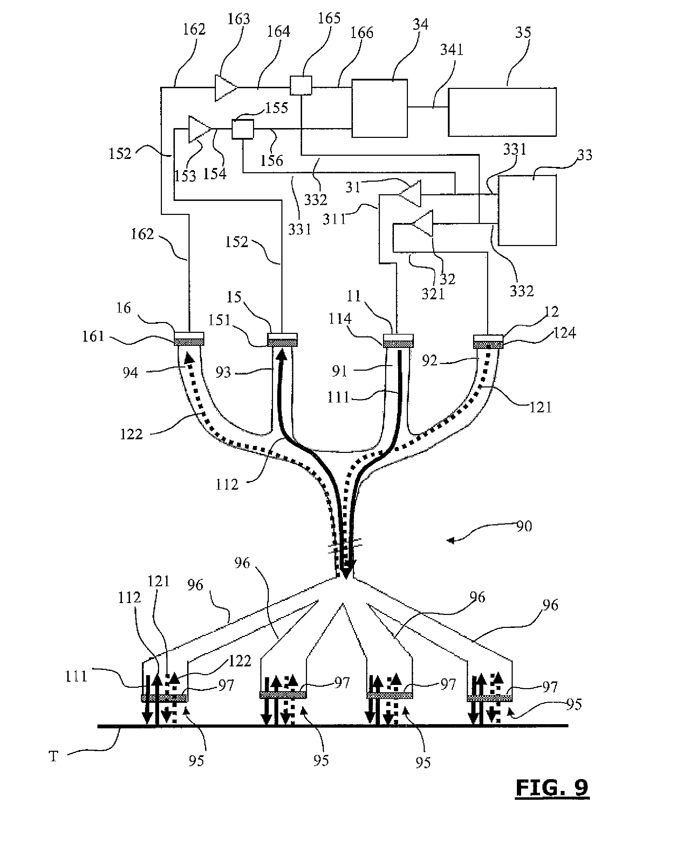

La figure 9 est une représentation schématique d'un cinquième mode de réalisation du système selon l'invention. Dans ce cinquième mode de réalisation, le système selon l'invention comprend un dispositif 90 de guide de rayonnements optiques, tel que par exemple un ensemble de fibres optiques. Les fibres optiques sont distribuées depuis quatre ouvertures 91-94 jusqu'à une pluralité d'extrémités 95. Les émetteurs 11 et 12 et les détecteurs 15 et 16 associés à leurs filtres, respectivement 114, 124, 151 et 161 sont disposés devant les ouvertures respectivement 91, 92, 93 et 94. Les rayonnements d'excitation 111 et 121 sont acheminés par les fibres optiques depuis les ouvertures 91 et 92 jusqu'aux extrémités 95 du dispositif 90 à travers une pluralité de branches 96. Au niveau de chaque extrémité 95, les rayonnements d'excitation 111 et 121 sont envoyés vers le tissu T. Les rayonnements de fluorescence induits 112 et 122 sont collectés par les fibres optiques et acheminés jusqu'aux détecteurs 15 et 16 disposés devant les ouvertures 93 et 94. Chaque extrémité 95 du dispositif 90 comprend une optique de collection 97.

Ce mode de réalisation présente l'avantage de pouvoir déporter les émetteurs 11 et 12 ainsi que les détecteurs 15 et 16. Par ailleurs les rayonnements d'excitation 111, 121 et les rayonnements de fluorescence 112 et 122 sont colinéaires. Le système selon l'invention est plus robuste. Les extrémités 95 du dispositif 90 permettent de réaliser des mesures multipoints sur des tissus de longueur importante.

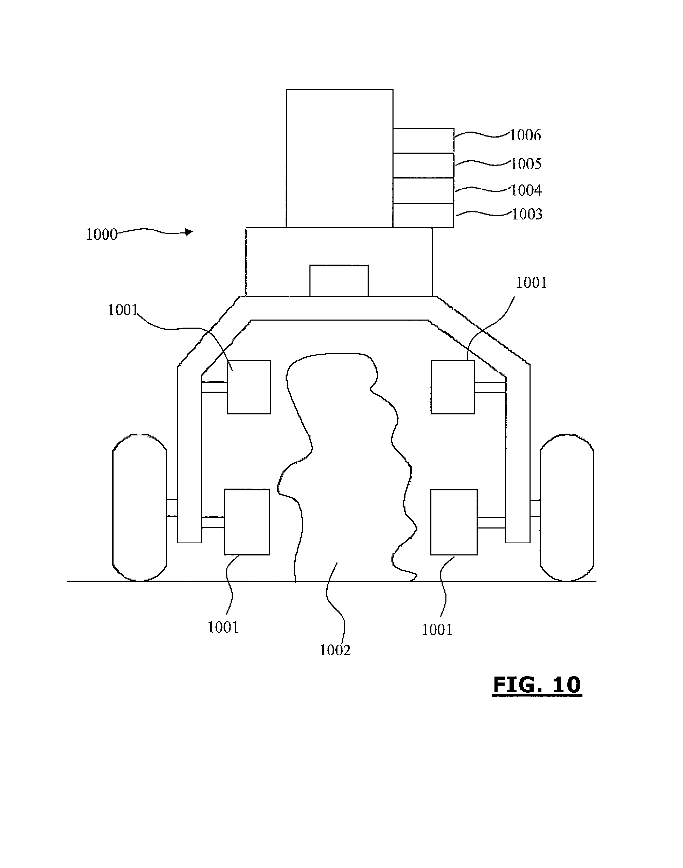

Ainsi que montré schématiquement sur la figure 10 le système selon l'invention peut être de dimension et de forme prévues pour être monté sur une structure 1000. La structure 1000 représentée en figure 10 comporte quatre systèmes selon l'invention 1001. La structure 1000 peut être de forme et de dimension prévue pour être tractée par un véhicule le long d'une surface importante de végétaux, par exemple pour surveiller et analyser en continu un rang de vigne 1002, sur plusieurs niveaux et des deux côtés.

Les systèmes selon l'invention 1001 peuvent intégrer, ou communiquer avec, un ou plusieurs moyens informatisés tels que des moyens de géo localisation 1003 permettant de réaliser une cartographie selon les résultats de mesure ou selon un traitement particulier réalisé sur la surface végétale ou des moyens de pilotage des mesures 1004, ou des moyens de commande 1005 d'un traitement effectué au fur et à mesure, ou des moyens de communication 1006 avec un ou plusieurs autres systèmes.

D'autres modes de réalisation peuvent être réalisés basés sur différents types de véhicules amenés à parcourir la zone à traiter ou évaluer, par exemple sur une tondeuse, ou sur un chariot individuel de transport de clubs de golf.

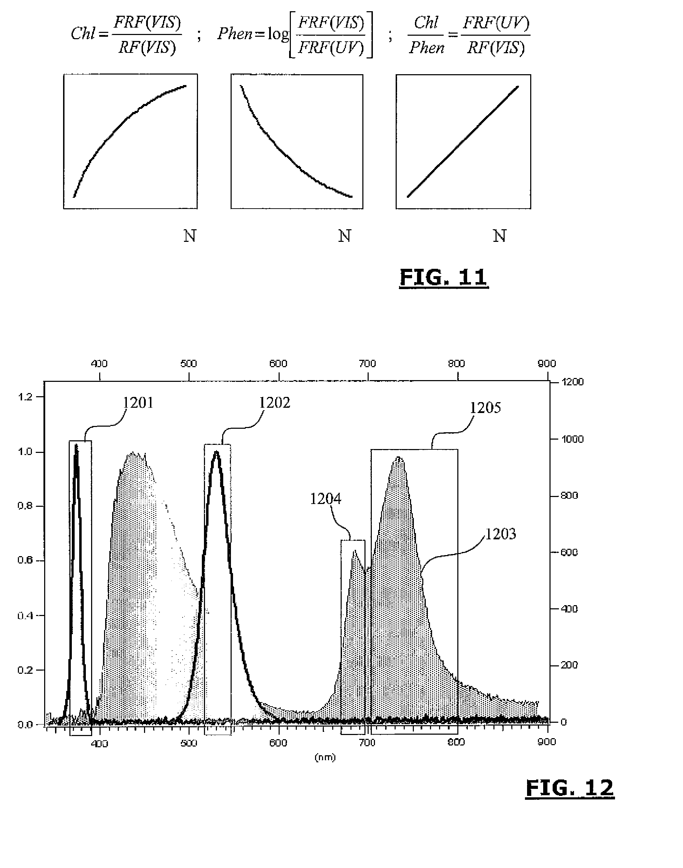

Nous allons maintenant décrire, en référence aux figures 11 et 12, un exemple d'application de l'invention. Dans l'exemple d'application que nous allons décrire le composé chromophore est un polyphénol. Dans le cas de cet exemple le rapport recherché NBI (Nitrogen Balance Index) est le rapport :

$$NBI = \frac{Chlorophylle(CHL)}{Polyphénols(PHEN)}$$

d'une plante. Tel que décrit plus haut ce rapport est un très bon indicateur de la nutrition azotée d'une plante. Il peut être utilisé pour le suivi de l'état de la nutrition azotée des plantes sur une surface importante. Il peut constituer un critère pour la réalisation, grâce au système selon l'invention, d'une cartographie de la nutrition azotée des plantes. Par ailleurs, il peut être utilisé pour traiter les plantes, par exemple pour apporter un complément azoté aux plantes.

La figure 11 montre l'évolution de la teneur en chlorophylle Chl, de la teneur en polyphénols Phen et du rapport de ces teneurs en fonction de la nutrition azotée N. Chacune de ces teneurs peut indépendamment être mesurée par une mesure de fluorescence en utilisant un premier rayonnement d'excitation dans l'ultraviolet (UV), absorbé par les polyphénols, et un deuxième rayonnement d'excitation dans le visible (VIS), non absorbé par les polyphénols. On aura :

$$Chl = \frac{FRF(VIS)}{RF(VIS)} \quad ; \quad Phen = \log\left[\frac{FRF(VIS)}{FRF(UV)}\right] \quad ; \quad \frac{Chl}{Phen} = \frac{FRF(UV)}{RF(VIS)}$$

Le système utilisé dans le cadre de cet exemple d'application particulier peut être un système réalisé selon l'un quelconque des modes de réalisation décrits plus haut. Il peut même être réalisé selon une combinaison quelconque des modes de réalisation décrits plus haut.

Le premier rayonnement d'excitation 111 émis par la source 11 est un rayonnement ultraviolet (UV), à une longueur d'onde ou un ensemble de longueurs d'onde absorbé par les polyphénols de la feuille, par exemple 375 nm. Un exemple d'une telle source 11 est une matrice de diodes électroluminescentes comme la OTLH-0280-UV (Opto Technolgy, IL, USA) associé de préférence à un filtre optique 114 comme le DUG11 (Schott, Allemagne) qui bloque les longueurs d'onde visibles et laisse passer les longueurs d'onde ultraviolettes. Ce rayonnement ultraviolet à 375 nm induit un premier rayonnement de fluorescence 112 dont seulement une partie se trouvant dans le rouge lointain, FRF(UV), centrée autour de 740 nm, et non absorbée par la chlorophylle sera mesurée. Le détecteur 15 associé au filtre 151 est sensible uniquement aux grandes longueurs d'onde du spectre d'émission de la fluorescence de la chlorophylle, c'est à dire les longueurs d'onde supérieures à 700 nm. Un exemple d'un tel détecteur 15 est une photodiode au silicium comme la PDB-C618 (Advanced Photonix Inc, USA) associé à un filtre optique 151 comme le RG9 de Schott (Allemagne).

Le deuxième rayonnement d'excitation 121 émis par la source 12 est un rayonnement dans le visible (VIS), à une longueur d'onde ou un ensemble de longueurs d'onde non absorbé par les polyphénols, par exemple à 530 nm. Un exemple d'une telle source 12 est la matrice de diodes électroluminescentes OTLH-0020-GN (Opto Technology, Inc, IL, USA) émettant à 530 nm, préférentiellement associé à un filtre optique 124 dans le but de couper toute émission parasite qui coïnciderait avec la bande spectrale de sensibilité du détecteur 16. Le rayonnement visible (VIS) induit un deuxième rayonnement de fluorescence 122 de la chlorophylle. Ce deuxième rayonnement de fluorescence 122 possède une bande d'émission 23 dans le rouge, RF(VIS), dans le spectre d'absorption de la chlorophylle et va donc être réabsorbé en partie par la chlorophylle. La partie non-réabsorbée du rayonnement de fluorescence dans la bande 23 sera mesurée par le détecteur 16 associé au filtre 161. Elle correspond aux courtes longueurs d'onde du spectre d'émission de fluorescence de la chlorophylle, c'est à dire les longueurs d'onde proches du pic d'émission à 685 nm. Le détecteur 16 associé au filtre 161 est donc sensible uniquement aux courtes longueurs d'onde du spectre d'émission de la fluorescence de la chlorophylle. Un tel détecteur 16 peut être une photodiode au silicium devant lequel est placé un filtre approprié 161, comme un filtre interférentiel centré sur 685 nm. La figure 12 donne une représentation du spectre 1201 du premier rayonnement d'excitation 111, du spectre 1202 du deuxième rayonnement d'excitation 121, du spectre 1203 de fluorescence de la chlorophylle, du spectre 1205 de la fluorescence FRF(UV) mesurée par le détecteur 15 et du spectre 1204 de la fluorescence RF(VIS) mesurée par le détecteur 16.

Le rapport NBI est alors calculé selon la formule suivante :

$$NBI = \frac{FRF(UV)}{RF(VIS)} \, .$$

D'autres modes de modulation des rayonnements d'excitation 111 et 121 peuvent être envisagés. Les rayonnements 111 et 121 peuvent par exemple être modulés sinusoïdalement à des fréquences différentes, le rayonnement 111 étant modulée à une fréquence f1 et le rayonnement 121 à une fréquence f2. Le signal 132 issu du détecteur 13 sera filtré à la fréquence f1 de modulation du rayonnement 111 tandis que le signal 142 issu du détecteur 14 sera filtré à la fréquence f2 de modulation du rayonnement 121.

L'invention n'est pas limitée aux exemples d'application décrits ci-dessus. La disposition des sources et des détecteurs, le type de source et de détecteur utilisés, l'optique de collimation, et la modulation des différents rayonnements peuvent être changés sans que cela sorte du champ de l'invention.

**Revendications**

1. Procédé pour déterminer le rapport des teneurs en chlorophylle (14) et en un composé chromophore (13) d'un tissu végétal (T), ledit composé chromophore (13) n'étant pas fluorescent dans la bande de fluorescence (22) de la chlorophylle (14), ledit procédé comprenant les opérations suivantes :

   - émission, par un premier émetteur (11) en direction dudit tissu végétal (T), d'un rayonnement optique, dit premier rayonnement d'excitation (111), choisi de manière à être absorbé en partie par le composé chromophore (13) et induire un premier rayonnement de fluorescence (112) de la chlorophylle (14),
   - détection, par un premier détecteur (15), d'une partie dudit premier rayonnement de fluorescence (112) se trouvant en dehors du spectre d'absorption (21) de la chlorophylle (14),
   - émission, par un deuxième émetteur (12) en direction dudit tissu végétal (T), d'un rayonnement optique, dit deuxième rayonnement d'excitation (121), choisi de manière à ne pas être absorbé par le composé chromophore (13) et induire un deuxième rayonnement de fluorescence (122) de la chlorophylle (14),
   - détection, par un deuxième détecteur (16), d'une partie dudit deuxième rayonnement de fluorescence (122) se trouvant dans le spectre d'absorption (21) de la chlorophylle (14), et
   - détermination dudit rapport à partir du rapport desdits rayonnements de fluorescences détectés.

2. Procédé selon la revendication 1, **caractérisé en ce que** chacun des détecteurs (15,16) fournit un signal électrique (152,162), ledit procédé comprenant en outre un échantillonnage, par des moyens d'échantillonnage (155,165), du signal électrique (152,162) fourni par chaque détecteur (15,16).

3. Procédé selon l'une quelconque des revendications 1 ou 2, **caractérisé en ce que** les premier et deuxième rayonnements d'excitation (111, 121) sont émis sous forme d'impulsions de manière non simultanée, ledit procédé comprenant en outre une synchronisation des émetteurs (11, 12) et des moyens d'échantillonnage (155, 165) de manière à ce que l'échantillonnage du signal électrique (152, 162) fourni par le premier et/ou le deuxième détecteur (15, 16) soit réalisée lorsque le premier et/ou le deuxième émetteur (11, 12) émet une impulsion.

4. Procédé selon l'une quelconque des revendications 1 ou 2, **caractérisé en ce que** les premier et deuxième rayonnements d'excitation (111, 121) sont modulés à deux fréquences différentes.

5. Procédé selon l'une quelconque des revendications précédentes, **caractérisé en ce qu'**il est mis en oeuvre sur une entité végétale choisie dans la liste suivante :

   - une feuille végétale,
   - un tissu d'une plante,
   - une partie d'une plante, et
   - un ensemble de plantes.

6. Procédé selon l'une quelconque des revendications précédentes, **caractérisé en ce que** :

   - le composé chromophore est un polyphénol et la longueur d'onde du premier rayonnement d'excitation (111) est comprise entre 300 et 500 nm ; et
   - la longueur d'onde du deuxième rayonnement d'excitation (121) est comprise entre 500 et 700 nm.

7. Procédé selon l'une quelconque des revendications 5 ou 6, **caractérisé en ce qu'**il comprend une détermination du besoin en nutrition azotée dudit tissu (T) à partir du rapport des rayonnements de fluorescence détectés.

8. Système pour déterminer le rapport des teneurs en chlorophylle (14) et en un composé chromophore (13) d'un tissu végétal (T), ledit composé chromophore (13) n'étant pas fluorescent dans la bande de fluorescence (22) de la chlorophylle (14), ledit système comprenant :

   - un premier émetteur (11) émettant, en direction dudit tissu (T), un rayonnement optique, dit premier rayonnement d'excitation (111), choisi de manière à être absorbé en partie par le composé chromophore (13) et induire un premier rayonnement de fluorescence (112) de la chlorophylle (14),
   - un premier détecteur (15) réalisant la détection d'une partie dudit premier rayonnement de fluorescence (112) se trouvant en dehors du spectre d'absorption (21) de la chlorophylle (14)
   - un deuxième émetteur (12) émettant, en direction dudit tissu (T), un rayonnement optique, dit deuxième rayonnement d'excitation (121), choisi de manière à ne pas être absorbé par le composé chromophore (13) et induire un deuxième rayonnement de fluorescence (122) de la chlorophylle (14),

- un deuxième détecteur (16) réalisant la détection d'une partie dudit deuxième rayonnement de fluorescence (122) se trouvant dans le spectre d'absorption (21) de la chlorophylle (14), et

- des moyens de calculs (18,19) agencés pour déterminer ledit rapport à partir du rapport desdits rayonnements de fluorescence détectés.

9. Système selon la revendication 8, **caractérisé en ce qu'**il comprend une optique de collimation réalisant la collimation du premier et du deuxième rayonnement d'excitation (111,121) vers le tissu (T) et la collimation du premier rayonnement de fluorescence (112) vers le premier détecteur (15) et la collimation du deuxième rayonnement de fluorescence (122) vers le deuxième détecteur (16).

10. Système selon la revendication 9, **caractérisé en ce que** l'optique de collimation comprend :

- un premier miroir dichroïque (36) recevant le premier et le deuxième rayonnement d'excitation (111, 121), émis respectivement par le premier et le deuxième émetteur (11, 12), selon deux directions sensiblement perpendiculaires et rendant lesdits premier et deuxième rayonnements d'excitation (111, 121) colinéaires,

- un deuxième miroir dichroïque (38) recevant le premier et le deuxième rayonnement de fluorescence (112, 122) provenant du tissu végétal (T) de manière colinéaires et dirigeant le premier et le deuxième rayonnement de fluorescence (112, 122) respectivement sur le premier détecteur (15) et le deuxième détecteur (16) selon deux directions sensiblement perpendiculaires, et

- des lentilles optiques (L7,L8 ; L9,L10) réalisant la collimation des rayonnements d'excitation (111, 121) et la collimation des rayonnements de fluorescences (112, 122) provenant du tissu (T).

11. Système selon la revendication 10, **caractérisé en ce que** l'optique de collimation comprend un troisième miroir dichroïque (37) réalisant

- la réflexion, vers le tissu végétal (T), des rayonnements d'excitation (111, 121) colinéaires provenant du premier miroir dichroïque (36), et

- la transmission, vers le deuxième miroir dichroïque (38), des rayonnements de fluorescence (112, 122) colinéaires provenant du tissu végétal (T) ;

lesdits rayonnements d'excitation (111, 121) et lesdits rayonnements de fluorescences (112, 122) étant colinéaires entre ledit troisième miroir dichroïque (37) et ledit tissu végétal (T), et la collimation desdits rayonnements d'excitation (111, 121) et desdits rayonnements de fluorescence (112, 122) étant réalisée par les mêmes lentilles optiques (L1,L2).

12. Système selon l'une quelconque des revendications 8 à 11, **caractérisé en ce que** :

- chaque émetteur (11, 12) comprend un filtre (114, 124) positionné devant ledit émetteur (11, 12), ledit filtre (114, 124) purifiant le rayonnement d'excitation (111, 121) émis par ledit émetteur (11, 12), et/ou

- chaque détecteur (15, 16) comprend un filtre (151, 161) positionné devant ledit détecteur (15, 16), ledit filtre (151, 161) éliminant les composantes non désirées du rayonnement de fluorescence (112,122) arrivant vers ledit détecteur (15, 16).

13. Système selon l'une quelconque des revendications 8 à 12, **caractérisé en ce que** chacun des premier et deuxième détecteurs (15, 16) fournit un signal électrique (152, 162), ledit système comprenant au moins un amplificateur (153, 163) amplifiant ledit signal électrique (152, 162), ledit système comprenant en outre au moins un échantillonneur (155, 165) commandé par un signal de synchronisation (331, 332) de manière à réaliser l'échantillonnage du signal électrique (154, 164) fournit par le premier et/ou le deuxième détecteur (15, 16) lorsque le premier et/ou le deuxième rayonnement d'excitation (111, 121) est émis.

14. Système selon l'une quelconque des revendications 8 à 13, **caractérisé en ce que** le premier émetteur (11) et/ou le deuxième émetteur (12) comprend une matrice de diodes électroluminescentes.

15. Système selon l'une quelconque des revendications 8 à 14, **caractérisé en ce qu'**il est embarqué sur une machine mobile (1000) pour caractériser à la volée une pluralité de plantes, ledit système comprenant outre des moyens de géolocalisation (1003).

**Patentansprüche**

1. Verfahren zur Bestimmung des Verhältnisses der Gehalte an Chlorophyll (14) und an einem chromophoren Bestandteil (13) eines Pflanzengewebes (T) zu einander, wobei der chromophore Bestandteil (13) in dem Fluoreszenzband (22) des Chlorophylls (14) nicht fluoreszierend ist, wobei das Verfahren folgende Schritte umfasst:

   - Ausstrahlung einer Lichtstrahlung, der sogenannten ersten Anregungsstrahlung (111), durch einen ersten Sender (11) in Richtung des Pflanzengewebes (T), derart ausgewählt, dass sie teilweise durch den chromophoren Bestandteil (13) absorbiert wird und eine erste Fluoreszenz-Strahlung (112) des Chlorophylls (14) induziert,
   - Erfassung eines Teils der ersten Fluoreszenz-Strahlung (112), welche außerhalb des Absorptionsspektrums (21) des Chlorophylls (14) liegt, durch einen ersten Detektor (15),
   - Ausstrahlung einer Lichtstrahlung, der sogenannten zweiten Anregungsstrahlung (121), durch einen zweiten Sender (12) in Richtung des Pflanzengewebes (T), derart ausgewählt, dass sie durch den chromophoren Bestandteil (13) nicht absorbiert wird und eine zweite Fluoreszenz-Strahlung (122) des Chlorophylls (14) induziert,
   - Erfassung eines Teils der zweiten Fluoreszenz-Strahlung (122), welche innerhalb des Absorptionsspektrums (21) des Chlorophylls (14) liegt, durch einen zweiten Detektor (16), und
   - Bestimmung des Verhältnisses anhand des Verhältnisses der genannten, erfassten Fluoreszenz-Strahlungen zu einander.

2. Verfahren nach Anspruch 1, **dadurch gekennzeichnet, dass** jeder der Detektoren (15, 16) ein elektrisches Signal (152, 162) ausgibt, wobei das Verfahren außerdem eine Abtastung des durch jeden Detektor (15, 16) ausgegebenen, elektrischen Signals (152, 162) durch Abtastungseinrichtungen (155, 165) umfasst.

3. Verfahren nach einem der Ansprüche 1 oder 2, **dadurch gekennzeichnet, dass** die erste und die zweite Anregungsstrahlungen (111, 121) nicht gleichzeitig als Impulse ausgesendet werden, wobei das Verfahren außerdem eine Synchronisierung der Sender (11, 12) und der Abtastungseinrichtungen (155, 165) umfasst, sodass die Abtastung des durch den ersten und/oder den zweiten Detektor (15, 16) ausgegebenen elektrischen Signals (152, 162) erfolgt, wenn der erste und/oder der zweite Sender (11, 12) einen Impuls aussendet.

4. Verfahren nach einem der Ansprüche 1 oder 2, **dadurch gekennzeichnet, dass** die erste und die zweite Anregungsstrahlungen (111, 121) mit zwei verschiedenen Frequenzen moduliert sind.

5. Verfahren nach einem der vorhergehenden Ansprüche, **dadurch gekennzeichnet, dass** es bei einer Pflanzeneinheit aus folgender Liste umgesetzt wird:

   - ein pflanzliches Blatt,
   - ein Pflanzengewebe,
   - ein Teil einer Pflanze, und
   - eine Pflanzenanordnung.

6. Verfahren nach einem der vorhergehenden Ansprüche, **dadurch gekennzeichnet, dass**:

   - der chromophore Bestandteil ein Polyphenol ist und die Wellenlänge der ersten Anregungsstrahlung (111) zwischen 300-500 nm liegt; und
   - die Wellenlänge der zweiten Anregungsstrahlung (121) zwischen 500-700 nm liegt.

7. Verfahren nach einem der Ansprüche 5 oder 6, **dadurch gekennzeichnet, dass** es eine Bestimmung des Stickstoffernährungsbedarfs des genannten Gewebes (T) anhand des Verhältnisses der erfassten Fluoreszenz-Strahlungen zu einander umfasst.

8. Verfahren zur Bestimmung des Verhältnisses der Gehalte an Chlorophyll (14) und an einem chromophoren Bestandteil (13) eines Pflanzengewebes (T) zu einander, wobei der chromophore Bestandteil (13) in dem Fluoreszenzband (22) des Chlorophylls (14) nicht fluoreszierend ist, wobei das Verfahren umfasst:

   - einen ersten Sender (11), der in Richtung des Pflanzengewebes (T) eine Lichtstrahlung, die sogenannte erste Anregungsstrahlung (111) aussendet, derart ausgewählt, dass sie teilweise durch den chromophoren Bestandteil (13) absorbiert wird und eine erste Fluoreszenz-Strahlung (112) des Chlorophylls (14) induziert,

- einen ersten Detektor (15) zur Erfassung eines Teils der ersten Fluoreszenz-Strahlung (112), welche außerhalb des Absorptionsspektrums (21) des Chlorophylls (14) liegt,
- einen zweiten Sender (12), der in Richtung des genannten Pflanzengewebes (T) eine Lichtstrahlung, die sogenannte zweite Anregungsstrahlung (121) aussendet, derart ausgewählt, dass sie durch den chromophoren Bestandteil (13) nicht absorbiert wird und eine zweite Fluoreszenz-Strahlung (122) des Chlorophylls (14) induziert,
- einen zweiten Detektor (16) zur Erfassung eines Teils der zweiten Fluoreszenz-Strahlung (122), welche innerhalb des Absorptionsspektrums (21) des Chlorophylls (14) liegt, und
- Berechnungseinrichtungen (18, 19), derart ausgebildet, dass sie das genannte Verhältnis anhand des Verhältnisses der erfassten Fluoreszenz-Strahlungen zu einander bestimmen.

9. System nach Anspruch 8, **dadurch gekennzeichnet, dass** es eine Kollimatoroptik zur Kollimation der ersten und der zweiten Anregungsstrahlung (111, 121) zum Gewebe (T) hin und zur Kollimation der ersten Fluoreszenz-Strahlung (112) zum ersten Detektor (15) hin und zur Kollimation der zweiten Fluoreszenz-Strahlung (122) zum zweiten Detektor (16) hin umfasst.

10. System nach Anspruch 9, **dadurch gekennzeichnet, dass** die Kollimatoroptik umfasst:

- einen ersten dichroitischen Spiegel (36), der die erste und die zweite, jeweils durch den ersten und den zweiten Sender (11, 12) nach zwei, im Wesentlichen senkrechten Richtungen ausgesendeten Anregungsstrahlungen (111, 121) empfängt und die genannten erste und zweite Anregungsstrahlungen (111, 121) kollinear macht,
- einen zweiten dichroitischen Spiegel (38), der die erste und die zweite, vom Pflanzengewebe (T) kollinear ausgehenden Fluoreszenz-Strahlungen (112, 122) empfängt und die erste und die zweite Fluoreszenz-Strahlungen (112, 122) jeweils auf den ersten Detektor (15) und den zweiten Detektor (16) nach zwei, im Wesentlichen senkrechten Richtungen, leitet, und
- optische Linsen (L7, L8; L9, L10) zur Kollimation der Anregungsstrahlungen (111, 121) und zur Kollimation der vom Gewebe (T) ausgestrahlten Fluoreszenz-Strahlungen (112, 122).

11. System nach Anspruch 10, **dadurch gekennzeichnet, dass** die Kollimatoroptik einen dritten dichroitischen Spiegel (37) umfasst, wobei dieser

- die Reflexion zum Pflanzengewebe (T) hin der kollinearen, vom ersten dichroitischen Spiegel (36) ausgehenden Anregungsstrahlungen (111, 121) und
- die Übertragung zum zweiten dichroitischen Spiegel (38) hin der kollinearen, vom Pflanzengewebe (T) ausgehenden Fluoreszenz-Strahlungen (112, 122) ausführt;
wobei die Anregungsstrahlungen (111, 121) und die Fluoreszenz-Strahlungen (112,. 122) zwischen dem dritten dichroitischen Spiegel (37) und dem Pflanzengewebe (T) kollinear sind, und wobei die Kollimation der Anregungsstrahlungen (111, 121) und der Fluoreszenz-Strahlungen (112, 122) durch die gleichen optischen Linsen (L1, L2) ausgeführt wird.

12. System nach einem der Ansprüche 8 bis 11, **dadurch gekennzeichnet, dass**:

- jeder Sender (11, 12) ein vor dem Sender (11, 12) gelagertes Filter (114, 124) umfasst, wobei das genannte Filter (114, 124) die durch den Sender (11, 12) ausgestrahlte Anregungsstrahlung (111, 121) bereinigt, und/oder
- jeder Detektor (15, 16) ein vor dem Detektor (15, 16) gelagertes Filter (151, 161) umfasst, wobei das genannte Filter (151, 161) die unerwünschten, beim genannten Detektor (15, 16) ankommenden Komponenten der Fluoreszenz-Strahlung (112, 122) ausfiltert.

13. System nach einem der Ansprüche 8 bis 12, **dadurch gekennzeichnet, dass** der erste Detektor (15) und der zweite Detektor (16) jeweils ein elektrisches Signal (152, 162) ausgeben, wobei das System mindestens einen Verstärker (153, 163) zur Verstärkung des elektrischen Signals (152, 162) umfasst, wobei das System außerdem mindestens einen Abtaster (155, 165) umfasst, der durch ein Synchronisierungssignal (331, 332) derart gesteuert wird, dass die Abtastung des durch den ersten und/oder den zweiten Detektor (15, 16) ausgegebenen, elektrischen Signals (154, 164) erfolgt, wenn die erste und/oder die zweite Anregungsstrahlung (111, 121) ausgesendet wird.

14. System nach einem der Ansprüche 8 bis 13, **dadurch gekennzeichnet, dass** der erste Sender (11) und/oder der zweite Sender (12) eine Matrix von Elektrolumineszenzdioden umfasst.

**15.** System nach einem der Ansprüche 8 bis 14, **dadurch gekennzeichnet, dass** es auf einer bewegbaren Maschine (1000) zur spontanen Charakterisierung einer Vielzahl von Pflanzen aufgenommen ist, wobei das System außerdem Einrichtungen zur Ortsbestimmung (1003) umfasst.

**Claims**

**1.** Method for determining the ratio of the contents of chlorophyll (14) and of a chromophorous compound (13) in a plant tissue (T), said chromophorous compound (13) not being fluorescent in the fluorescence band (22) of chlorophyll (14), said method comprising the following operations:

- emission, by a first emitter (11) in the direction of said plant tissue (T), of optical radiation, called the first excitation radiation (111), selected so as to be absorbed partially by the chromophorous compound (13) and to induce a first fluorescence radiation (112) of the chlorophyll (14),
- detection, by a first detector (15), of a portion of said first fluorescence radiation (112) located outside of the absorption spectrum (21) of the chlorophyll (14),
- emission, by a second emitter (12) in the direction of said plant tissue (T), of optical radiation, called the second excitation radiation (121), selected so as not to be absorbed by the chromophorous compound (13) and to induce a second fluorescence radiation (122) of the chlorophyll (14),
- detection, by a second detector (16), of a portion of said second fluorescence radiation (122) located in the absorption spectrum (21) of the chlorophyll (14), and
- determination of said ratio from the ratio of said fluorescence radiations that were detected.

**2.** Method according to claim 1, **characterized in that** each of the detectors (15, 16) supplies an electrical signal (152, 162), said method comprising moreover sampling, by sampling means (155, 165), of the electrical signal (152, 162) supplied by each detector (15, 16).

**3.** Method according to either of claims 1 or 2, **characterized in that** the first and second excitation radiations (111, 121) are emitted in the form of pulses non-simultaneously, said method further comprising synchronization of the emitters (11, 12) and the sampling means (155, 165) in such a way that the sampling of the electrical signal (152, 162) supplied by the first and/or the second detector (15, 16) is carried out when the first and/or the second emitter (11, 12) emits a pulse.

**4.** Method according to any one of claims 1 or 2, **characterized in that** the first and second excitation radiations (111, 121) are modulated at two different frequencies.

**5.** Method according to any one of the preceding claims, **characterized in that** it is applied on a plant entity selected from the following list:

- a plant leaf,
- a tissue from a plant,
- a part of a plant, and
- a collection of plants.

**6.** Method according to any one of the preceding claims, **characterized in that**:

- the chromophorous compound is a polyphenol and the wavelength of the first excitation radiation (111) is between 300 and 500 nm; and
- the wavelength of the second excitation radiation (121) is between 500 and 700 nm.

**7.** Method according to any one of claims 5 or 6, **characterized in that** it comprises determination of the nitrogen nutrition requirement of said tissue (T) from the ratio of the fluorescence radiations detected.

**8.** System for determining the ratio of the contents of chlorophyll (14) and of a chromophorous compound (13) in a plant tissue (T), said chromophorous compound (13) not being fluorescent in the fluorescence band (22) of the chlorophyll (14), said system comprising:

- a first emitter (11) emitting, in the direction of said tissue (T), optical radiation, called the first excitation radiation (111), selected so as to be absorbed partially by the chromophorous compound (13) and to induce a first fluorescence radiation (112) of the chlorophyll (14),
- a first detector (15) performing the detection of a portion of said first fluorescence radiation (112) located outside of the absorption spectrum (21) of the chlorophyll (14),
- a second emitter (12) emitting, in the direction of said tissue (T), optical radiation, called the second excitation radiation (121), selected so as not to be absorbed by the chromophorous compound (13) and to induce a second fluorescence radiation (122) of the chlorophyll (14),
- a second detector (16) performing the detection of a portion of said second fluorescence radiation (122) located in the absorption spectrum (21) of the chlorophyll (14), and
- calculation means (18, 19) for determining said ratio from the ratio of said fluorescence radiations detected.

9. System according to claim 8, **characterized in that** it comprises a collimating optical system performing collimation of the first and the second excitation radiation (111, 121) towards the tissue (T) and collimation of the first fluorescence radiation (112) towards the first detector (15) and collimation of the second fluorescence radiation (122) towards the second detector (16).

10. System according to claim 9, **characterized in that** the collimating optical system comprises:

- a first dichroic mirror (36) receiving the first and the second excitation radiation (111, 121), emitted respectively by the first and the second emitter (11, 12), in two approximately perpendicular directions and making said first and second excitation radiations (111, 121) collinear,
- a second dichroic mirror (38) receiving the first and the second fluorescence radiation (112, 122) coming from the plant tissue (T) in a collinear manner and directing the first and the second fluorescence radiation (112, 122) respectively onto the first detector (15) and the second detector (16) in two approximately perpendicular directions, and
- optical lenses (L7, L8; L9, L10) performing collimation of the excitation radiations (111, 121) and collimation of the fluorescence radiations (112, 122) coming from the tissue (T).

11. System according to claim 10, **characterized in that** the collimating optical system comprises a third dichroic mirror (37) performing:

- reflection, towards the plant tissue (T), of the collinear excitation radiations (111, 121) coming from the first dichroic mirror (36), and
- transmission, towards the second dichroic mirror (38), of the collinear fluorescence radiations (112, 122) coming from the plant tissue (T);
said excitation radiations (111, 121) and said fluorescence radiations (112, 122) being collinear between said third dichroic mirror (37) and said plant tissue (T), and the collimation of said excitation radiations (111, 121) and said fluorescence radiations (112, 122) being performed by the same optical lenses (L1, L2).

12. System according to any one of claims 8 to 11, **characterized in that**:

- each emitter (11, 12) comprises a filter (114, 124) positioned in front of said emitter (11, 12), and said filter (114, 124) cleans up the excitation radiation (111, 121) emitted by said emitter (11, 12), and/or
- each detector (15, 16) comprises a filter (151, 161) positioned in front of said detector (15, 16), and said filter (151, 161) removes the unwanted components of the fluorescence radiation (112, 122) arriving at said detector (15, 16).

13. System according to any one of claims 8 to 12, **characterized in that** each of the first and second detectors (15, 16) supplies an electrical signal (152, 162), said system comprising at least one amplifier (153, 163) that amplifies said electrical signal (152, 162), said system also comprising at least one sampler (155, 165) controlled by a synchronizing signal (331, 332) so as to perform the sampling of the electrical signal (154, 164) supplied by the first and/or the second detector (15, 16) when the first and/or the second excitation radiation (111, 121) is emitted.

14. System according to any one of claims 8 to 13, **characterized in that** the first emitter (11) and/or the second emitter (12) comprises an array of light-emitting diodes.

15. System according to any one of claims 8 to 14, **characterized in that** it is mounted on a mobile machine (1000) for characterizing a plurality of plants in an ad hoc fashion, said system also comprising means for position determination

technology (1003).

**FIG. 1**

**FIG. 2**

**FIG. 3**

**FIG. 4**

**FIG. 5**

**FIG. 6**

EP 2 183 574 B1

FIG. 7

23

**FIG. 8**

**FIG. 9**

**FIG. 10**

$$Chl = \frac{FRF(VIS)}{RF(VIS)} \quad ; \quad Phen = \log\left[\frac{FRF(VIS)}{FRF(UV)}\right] \quad ; \quad \frac{Chl}{Phen} = \frac{FRF(UV)}{RF(VIS)}$$

**FIG. 11**

**FIG. 12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2830325, Goulas, Cerovic

**Littérature non-brevet citée dans la description**

- **CARTELAT.** Optically assessed contents of leaf polyphenolics and chlorophyll as indicators of nitrogen deficiency in wheat (Triticum aestivum L.). *Field Crops Research,* 2005, vol. 91, 35-49
- **BILGER.** Measurement of leaf epidermal transmittance of UV radiation by chlorophyll fluorescence. *Physiologia Plantarum,* vol. 101, 754-763

- **OUNIS.** Dual-excitation FLIDAR for the estimation of epidermal UV absorption in leaves and canopies. *Remote Sensing of Environment,* 2001, vol. 76, 33-48
- **LICHTENTHALER ; RINDERLE.** The role of chlorophyll fluorescence in the detection of stress conditions in plants. *CRC Crit Rev Anal Chem,* 1988, vol. 19, 29-85